# EUROPÄISCHE PATENTSCHRIFT

(11) **EP 0 752 358 B1**
(45) Veröffentlichungstag und Bekanntmachung des Hinweises auf die Patenterteilung: **23.12.1998**
(21) Anmeldenummer: 96108302.9
(22) Anmeldetag: 24.05.1996
(51) Int. Cl.: B62D 1/18

(54) **Einstellvorrichtung zur Neigungsverstellung eines schwenkbar angelenkten Mantelrohres einer Lenkspindel eines Kraftfahrzeuges**
Control device for adjusting the inclination of a pivotably mounted tubular jacket of the steering shaft of a motor vehicle
Dispositif de réglage de l'inclinaison d'enveloppe tubulaire, montée de manière pivotante, de l'arbre de direction d'un véhicule automobile

(30) Priorität: 03.07.1995 DE 19524195
(43) Veröffentlichungstag der Anmeldung: 08.01.1997
(73) Patentinhaber: DAIMLER-BENZ AKTIENGESELLSCHAFT, 70567 Stuttgart (DE)
(72) Erfinder: Peitsmeier, Karl, 71686 Aldingen (DE); Patzelt, Helmut, 71394 Kernen (DE)

(56) Entgegenhaltungen:
- EP-A- 0 697 325
- DE-C- 3 737 225

## Beschreibung

Die Erfindung betrifft eine Einstellvorrichtung zur Neigungsverstellung eines schwenkbar angelenkten Mantelrohres einer Lenkspindel eines Kraftfahrzeuges gemäß dem Oberbegriff des Anspruchs 1.

Aus der DE 37 37 225 C1, die im Oberbegriff des Anspruchs 1 berücksichtigt ist, ist eine Einstellvorrichtung zur Veränderung der Neigung eines Mantelrohres eines Kraftfahrzeuges bekannt, die einen rechteckförmigen Rahmen umfaßt, welcher das Mantelrohr am Fahrzeugaufbau abstützt. Der Rahmen, der zur Verstellung des Mantelrohres einen Spindeltrieb aufnimmt, ist zusätzlich als Lenker ausgebildet, indem seine Seitenteile endseitig in zwei voneinander beabstandeten, parallelen Schwenkachsen an den rechtwinklig anschließenden Teilen des Rahmens gelagert sind. Durch diese seitlichen Lenkhebel wird die Verschwenkung des Mantelrohres auf einem Radius um seine entfernte Schwenkachse mit einer geradlinigen Verschiebung durch den Spindeltrieb entlang dessen Spindel möglich.

In der DE 35 36 285 C1 ist eine verstellbare Lenksäule eines Kraftfahrzeuges beschrieben, die mit dem Aufbau durch ein längenveränderbares Verbindungsglied verbunden ist. Die eingesetzte Kolben-Zylinder-Einheit kann das schwere Gewicht der gesamten Lenksäule, das vollständig an dem für die Neigungsverstellung bestimmten Verbindungsglied angreift, nur unzuverlässig abstützen, da die Haltewirkung von der Abdichtung des Kolbens im Zylinder abhängig ist. Außerdem müßte für die Steuerbarkeit der Kolben-Zylinder-Einheit der Oeldruck im System fortwährend aufrechterhalten werden. Des weiteren wird hier vorgeschlagen, das Mantelrohr mittels zweier in der Länge unabhängig voneinander motorisch veränderlicher Spindeltriebe mit 2 Festpunkten der Karosserie zu verbinden. Die Spindeln sind winklig zueinander angeordnet, wodurch sie bei der Neigungsverstellung des Mantelrohres in Abhängigkeit voneinander mit unterschiedlichem Verstellweg und unterschiedlicher Schwenkbewegung ein- oder ausgefahren werden müssen, da sonst die Verstellbewegung blockiert wird, wodurch ein hoher Aufwand erforderlich wird, um die als Lenker wirkende Spindeltriebe in ihrer Längenänderung aufeinander abzustimmen.

Aus der älteren EP 0 697 325 A2 ist eine Einstellvorrichtung für eine Lenkspindel bekannt, welche einen lenkenden Spindeltrieb mit einer einzigen Spindel umfaßt und als zusätzliche Stütze einen Teleskopauszug benötigt. Der Teleskopauszug wird bei der Neigungsverstellung der Lenkspindel weder zur Spindel parallelverschwenkt noch weist er eine gleiche Verlängerung oder Verkürzung auf. Der Spindeltrieb greift oben mittig am Mantelrohr an, wodurch die Stabilität der Anordnung zur Abstützung der Lenkspindel nicht ausreicht, aber dennoch der notwendige Bauraum groß ist.

Die JP(U)-A-63-19469 (1988) zeigt eine Neigungsverstellung an einer Lenksäule, bei der ein Spindeltrieb einen Stützsteg anhebt, an dem das Mantelrohr festgelegt ist. Ein Ausgleich zwischen Verstellradius und geradliniger Verstellbewegung ist hier nicht erkennbar und muß deshalb, damit die Verstellbewegung nicht zum Verklemmen führt, an anderer Stelle, z.B. im untenliegenden Schwenklager erfolgen.

Die Aufgabe der Erfindung besteht darin, eine gattungsgemäße Einstellvorrichtung mit wenigen Bauteilen funktionstüchtig auszubilden.

Die Aufgabe wird durch die kennzeichnenden Merkmale des Patentanspruchs 1 gelöst.

Die Einstellvorrichtung zur Neigungsverstellung eines schwenkbar angelenkten Mantelrohres einer Lenkspindel eines Kraftfahrzeuges gewährleistet durch den Spindeltrieb eine sichere, kraftschlüssige Abstützung des Mantelrohres bzw. der Lenksäule in jeder eingestellten Schwenkposition.

Eine Schwenkbewegung des Mantelrohres trotz geradlinigem Verstellweg des Spindeltriebs wird durch die zusätzliche Lenkhebelfunktion im Spindeltrieb ermöglicht. Diese Funktionen werden durch eine Anordnung mit nur wenigen Bauteilen gelöst.

Eine der Schwenkachsen des Lenkhebels ist in die Stützvorrichtung und die andere Schwenkachse in den Spindeltrieb integriert, wodurch ein separater Lenkhebel eingespart ist. Herstellungsgünstig ist es dabei, die Stützvorrichtung selbst in dieser Schwenkachse schwenkbar am Aufbau zu lagern und die andere Schwenkachse am drehfesten Teil (Spindel oder Mutter) des Spindeltriebs vorzusehen.

Zudem ist es insbesondere bei schwenkbar am Aufbau gelagerter Stützvorrichtung sinnvoll, das sich durch den Antrieb drehende Teil des Spindeltriebs, welches sein Gegenstück in Längsrichtung verfährt, an der Stützvorrichtung zu lagern und über eine biegsame oder gelenkige Welle anzutreiben, so daß der Antrieb am Aufbau ruhend festgelegt werden kann. Damit muß der Antrieb weder mit der Bewegung des Mantelrohres als zusätzliches Gewicht mitbewegt werden, noch wird die Schwingungsbelastung des Mantelrohres durch den Antrieb erhöht.

Weitere Vorteile und Ausgestaltungen gehen aus den Unteransprüchen und der Beschreibung hervor.

Die Erfindung ist nachstehend anhand einer Zeichnung näher beschrieben, wobei diese einen Schnitt quer zur Längsachse eines Mantelrohres 1 im Bereich einer Einstellvorrichtung 2 zeigt, die zur Neigungsverstellung des am entfernten unteren Ende schwenkbar angelenkten Mantelrohres 1 dient.

Das Mantelrohr 1 nimmt eine drehbare Lenkspindel 3 auf, die die Lenkbewegung vom Lenkrad im Fahrzeuginnenraum auf das Lenkgetriebe bzw. die Fahrzeugräder überträgt.

Um die Höhe des Lenkrads an die Sitzposition des Insassen anpassen zu können, kann das Mantelrohr 1 angehoben oder abgesenkt und in der gewünschten Höhenlage arretiert werden.

Die Einstellvorrichtung 2 umfaßt hierzu einen Spindeltrieb 4 mit zwei drehfest gelagerten Spindeln 5 und damit zusammenwirkenden drehbaren Stellmuttern 6a, 6b. In einer weiteren Ausbildung können auch die Spindeln angetrieben und die Stellmuttern drehfest gelagert sein.

Ein hier nur als Symbol dargestellter Antrieb 7, der, um die beweglichen Teile nicht durch sein Gewicht zu belasten, am hier nur skizzierten Fahrzeugaufbau 8 festgelegt wird, treibt eine biegsame Antriebswelle 9 an, welche wiederum drehend auf ein Schneckenrad 10 einwirkt, das drehfest auf der Stellmutter 6a sitzt und diese deshalb mitverdreht. Synchron wird über ein ebenfalls mitverdrehtes Abtriebszahnrad 11 und ein Gegenzahnrad 12 auf ein Antriebszahnrad 13 der Stellmutter 6b eingewirkt, wodurch diese mit derselben Drehrichtung und Drehgeschwindigkeit wie die Stellmutter 6a verdreht wird.

Durch die Drehbewegung der Stellmuttern 6a, 6b wird über den Eingriff einer Innenverzahnung 14 in das Gewinde 15 der Spindeln 5 die jeweils zugeordnete Spindel 5 zwischen zwei Endanschlägen in ihrer Längsrichtung verschoben.

Die Spindeln 5 sind jeweils in einem Schwenklager 16 an einem Träger 17 gelagert, auf dem das Mantelrohr 1 befestigt ist. Das Mantelrohr 1 liegt dabei zwischen den Spindeln 5, wodurch die Querkräfte auf das Mantelrohr 1 mit einem geringeren Hebelweg im Spindeltrieb 4 abgestützt werden können, als wenn das Mantelrohr 1 unten am Träger 17 angehängt wäre. Durch die Verschiebung der Spindeln 5 wird also das Mantelrohr 1 an dieser Stelle angehoben oder abgesenkt und damit dessen Neigung verstellt, wodurch dann auch das Lenkrad in der Höhenlage verändert ist. Wenn die Spindeln 5 nicht durch den Antrieb 7 bewegt werden, liegen sie drehfest, wodurch die Neigung des Mantelrohres 1 formschlüssig erhalten bleibt.

Ein Bestandteil der Einstellvorrichtung 2 ist eine Stützvorrichtung 18, welche dazu dient, das Mantelrohr 1 am Fahrzeugaufbau 8 zu lagern. Diese stützt die Stellmuttern 6a, 6b in Längsrichtung unverschiebbar aber um die Längsachse drehbar ab und dient auch der Lagerung der Zahnräder 10, 11, 12 und 13. Die Lagerung des drehbaren Teils des Spindeltriebs 4, hier der Stellmuttern 6a, 6b, führt zu einem nur kurzen zu überbrückenden Weg vom Antrieb 7 zur Stellmutter 6a bzw. 6b. Die Stützvorrichtung 18 ist über den Spindeltrieb 4 mit dem Mantelrohr 1 verbunden.

Da das am unteren Ende schwenkbar angelenkte Mantelrohr 1 über den Träger 17 auf einer Kreisbahn bewegt wird, der Spindeltrieb 4 den Träger 17 aber auf einer Geraden verschiebt, wirkt zwischen Mantelrohr 1 und Aufbau 8 ein Lenkhebel 19, der diese Bewegungen aneinander angleicht. Hierzu sind dem Lenkhebel 19 zwei parallele Schwenkachsen 20 und 21 zugeordnet, die einen für die Verschwenkung ausreichenden Abstand voneinander aufweisen. Der Lenkhebel 19 ist nicht als separates Bauteil ausgebildet, sondern in die Einstellvorrichtung 2 aus Stützvorrichtung 18, Spindeltrieb 4 und Träger 17 des Mantelrohres 1 integriert. Eine der Schwenkachsen 20 ist an der Stützvorrichtung 18 vorgesehen, wobei hier diese Lagerung gleichzeitig auch die Lagerung der Stützvorrichtung 18 am Fahrzeugaufbau 8 beinhaltet, und damit keine weitere Befestigung mehr vorgesehen werden muß. Die korrespondierende Schwenkachse 21 ist am entfernten Ende der Spindeln 5 in den jeweiligen Schwenklagern 16 verwirklicht, wodurch dann die Wirklänge aus Stellmutter 6a bzw. 6b und Spindel 5 zwischen diesen beiden Schwenkachsen 20 und 21 die Lenkhebelfunktion übernimmt.

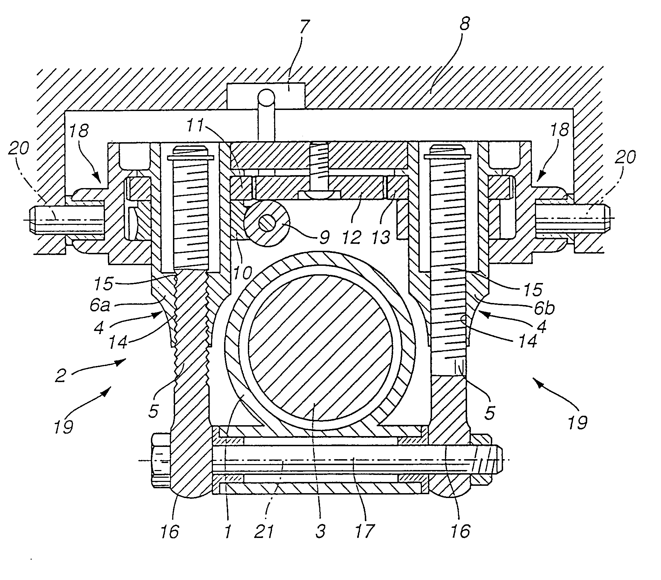

## Patentansprüche

1. Einstellvorrichtung zur Neigungsverstellung eines schwenkbar angelenkten Mantelrohres (1) einer Lenkspindel (3) eines Kraftfahrzeuges, mit einer am Fahrzeugaufbau gelagerten Stützvorrichtung (18), mit der das Mantelrohr (1) über einen Spindeltrieb (4) verbunden ist, welcher zwei parallel wirkende Spindeln (5) aufweist, durch welche das Mantelrohr (1) zum Fahrzeugaufbau verstellbar ist, wobei zwischen Mantelrohr (1) und Aufbau zwei zueinander parallele Lenkhebel wirken, denen jeweils zwei voneinander beabstandete, erste und zweite zueinander parallele Schwenkachsen (20, 21) zugeordnet sind, wovon die erste Schwenkachse (20) der Stützvorrichtung (18) zugehört und wovon die zweite Schwenkachse (21) einen Bestendteil des Spindeltriebes bildet,
**dadurch gekennzeichnet,**
daß die parallel verfahrenden Spindeln (5) zugleich die parallel schwenkenden Lenkhebel bilden.

2. Einstellvorrichtung nach Anspruch 1,
**dadurch gekennzeichnet,**
daß die Stützvorrichtung (18) in der einen Schwenkachse (20) schwenkbar am Fahrzeugaufbau (8) gelagert ist.

3. Einstellvorrichtung nach Anspruch 1,
**dadurch gekennzeichnet,**
daß die drehfeste Spindel (5) des Spindeltriebs (4) dem Mantelrohr (1), und die Stellmutter (6a bzw. 6b) des Spindeltriebs (4) der Stützvorrichtung (18) zugeordnet ist.

4. Einstellvorrichtung nach Anspruch 3,
**dadurch gekennzeichnet,**
daß die Spindel (5) in einem endseitigen Lager (16) in der Schwenkachse (21) schwenkbar zum Mantelrohr (1) gelagert ist.

5. Einstellvorrichtung nach Anspruch 1,
**dadurch gekennzeichnet,**
daß ein Antriebsmotor (7) am Fahrzeugaufbau (8) festgelegt ist, und dieser auf eine gelenkige bzw. biegsame Antriebswelle (9) einwirkt.

## Claims

1. An adjusting device for adjusting the inclination of a pivotably coupled jacket tube (1) on the steering gear shaft (3) of a motor vehicle with a supporting device (18) mounted on the bodywork of the vehicle to which the jacket tube (1) is connected via a worm gear (4) which consists of two parallel acting worms (5) and by means of which the jacket tube (1) can be adjusted in relation to the bodywork of the vehicle, whereby two parallel pitman arms which act between the jacket tube (1) and the bodywork are in turn connected to two other parallel pivoting axes (20, 21) which are spaced at a distance from one another, with the first pivoting axis (20) being paced with the supporting device (18) and the second pivoting axis (21) forming a component of the worm gear,
**characterized in that**
the parallel running worms (5) also form the parallel pivoting pitman arms.

2. An adjusting device in accordance with Claim 1,
**characterized in that**
the supporting device (18) is mounted on the bodywork (8) of the vehicle in one of the pivoting axes (20) in such a way that it pivots.

3. An adjusting device in accordance with Claim 1,
**characterized in that**
the non-rotating worm (5) of the worm gear (4) is connected to the jacket tube (1), and the adjusting nut (6a/ 6b) of the worm gear (4) is connected to the supporting device (18).

4. An adjusting device in accordance with Claim 3,
**characterized in that**
the worm (5) is mounted in an end bearing (16) in the pivoting axis (21) in such a way that it pivots in relation to the jacket sleeve (1)

5. An adjusting device in accordance with Claim 1,
**characterized in that**
a drive motor (7) is fixed to the bodywork (8) of the vehicle and acts upon an articulated or flexible drive shaft (9).

## Revendications

1. Dispositif de réglage pour régler l'inclinaison d'un tube enveloppe (1), monté inclinable par une articulation, d'un arbre de direction (3) d'un véhicule automobile, dispositif de réglage qui comprend un dispositif d'appui (18) monté sur la carrosserie (8) du véhicule et auquel le tube enveloppe (1) est relié par l'intermédiaire d'un mécanisme d'actionnement (4) à broches, qui comporte deux broches filetées (5) agissant parallèlement et par lesquelles le tube enveloppe (1) est réglable par rapport à la carrosserie du véhicule, deux leviers d'orientation parallèles entre eux agissant entre le tube enveloppe (1) et la carrosserie, auxquels sont coordonnés deux axes de basculement (20, 21) espacés l'un de l'autre et parallèles entre eux, formant respectivement un premier et un second axe de basculement, dont le premier axe de basculement (20) appartient au dispositif d'appui (18) et dont le second axe de basculement (21) forme une partie du mécanisme d'actionnement à broches,
caractérisé en ce que les broches filetées (5), déplaçables parallèlement, forment en même temps les leviers d'orientation, s'inclinant parallèlement.

2. Dispositif de réglage selon la revendication 1, caractérisé en ce que le dispositif d'appui (18) est monté basculant sur la carrosserie (8) autour du premier axe de basculement (20).

3. Dispositif de réglage selon la revendication 1, caractérisé en ce que la broche filetée (5) du mécanisme d'actionnement (4), broche qui est fixe en rotation, est coordonnée au tube enveloppe (1), et l'écrou de réglage (6a ou 6b) du mécanisme d'actionnement (4) est coordonné au dispositif d'appui (18).

4. Dispositif de réglage selon la revendication 3, caractérisé en ce que la broche filetée (5) est montée inclinable par rapport au tube enveloppe (1), autour de l'axe de basculement (21), dans un palier d'extrémité (16).

5. Dispositif de réglage selon la revendication 1, caractérisé en ce qu'un moteur d'entraînement (7) est fixé à la carrosserie (8) du véhicule et agit sur un arbre d'entraînement articulé ou flexible (9).
